Europäisches Patentamt

European Patent Office

Office européen des brevets

(19)

(11) Veröffentlichungsnummer: **0 230 591**
B1

(12) # EUROPÄISCHE PATENTSCHRIFT

(45) Veröffentlichungstag der Patentschrift:
25.04.90

(21) Anmeldenummer: 86117285.6

(22) Anmeldetag: 11.12.86

(51) Int. Cl.⁴: **E04C 3/00**, B25J 18/02,
E04C 3/29

(54) **Träger.**

(30) Priorität: 29.01.86 DE 3602575

(43) Veröffentlichungstag der Anmeldung:
05.08.87 Patentblatt 87/32

(45) Bekanntmachung des Hinweises auf die Patenterteilung:
25.04.90 Patentblatt 90/17

(84) Benannte Vertragsstaaten:
AT CH ES FR GB IT LI

(56) Entgegenhaltungen:
DE-A- 3 313 215
DE-B- 1 169 095
FR-A- 1 321 943
FR-A- 2 530 526
US-A- 3 488 692
US-A- 4 416 097

(73) Patentinhaber: Haaf GmbH, Nobelstrasse 5,
D-7000 Stuttgart 80(DE)

(72) Erfinder: Bürger, Reinhard, Schwabstrasse 89,
D-7142 Marbach(DE)

(74) Vertreter: Schmid, Berthold et al, Patentanwälte
Dipl.-Ing. B. Schmid Dr. Ing. G. Birn
Falbenhennenstrasse 17, D-7000 Stuttgart 1(DE)

**Beschreibung**

Die Erfindung bezieht sich auf einen wenigstens einen Profilstab und zumindest eine Tragwand oder einen Tragkörper aufweisenden Träger, bei welchem jeder Profilstab zwei sich in dessen Längsrichtung erstreckende Laufflächen für zumindest je ein Rad, Gleitelement od. dgl. und zwei einen Winkel einschließende Längsstege aufweist, wobei die Längs-Mittelebenen der beiden Stege und sich senkrecht zu jeder Lauffläche erstreckende gedachte Längsebenen etwa in einer gemeinsamen Profillängsachse schneiden und jeder Steg sowie die anschließende Tragwand mindestens im Übergangsbereich eine gemeinsame Ebene, insbesondere Mittelebene, bilden, wobei außerdem der Querschnitt jedes Profilstabes zu einer gedachten Längsebene durch die Winkelhalbierende des von den beiden Längsstegen eingeschlossenen Winkels symmetrisch ausgebildet ist und die Längsstege vorzugsweise einen rechteckigen Querschnitt aufweisen sowie einen Winkel von etwa 30° bis 90°, vorzugsweise etwa 60° einschließen. Ein derartiger Träger ist durch die DE-B 1 169 095 bekannt geworden. Es handelt sich dabei um eine "Kastenträger-Kranbrücke für Konsollaufkatze". Die im Kranbau auf Träger einwirkenden Kräfte sind fast ausschließlich Gewichtskräfte und sie rühren aus der Eigenlast sowie der Nutzlast her. Entsprechend dieser Belastung müssen auch die Laufräder und die Laufflächen angebracht werden. Es entstehen dabei Raddrücke, die horizontal oder schräg nach links unten oder nach rechts unten geneigt verlaufen. Nach oben gerichtete Kräfte findet man im Kranbau nicht. Des weiteren treten dort auch kaum richtungsveränderliche Kräfte auf, die aus dem Beschleunigen bzw. Abbremsen des Krans herrühren. Dies führt insgesamt dazu, daß man im Kranbau nur Laufräder antrifft, die auf senkrecht oder schräg nach oben weisenden Flächen der Profilstäbe abrollen.

Nun gibt es aber auch Anwendungsgebiete solcher Träger, bei welchen die Laufräder od. dgl. wegen der ggfs. auch nach oben oder schräg nach oben gerichteten Kräfte an nach unten oder schräg nach unten weisenden Laufflächen entlang bewegt werden. Ein solches Anwendungsgebiet sind beispielsweise sogenannte Handhabungsgeräte, vielfach auch "Roboter" genannt. Die DE-A 3 313 215 befaßt sich mit einem derartigen Anwendungsgebiet.

Hierbei wird vorgeschlagen, einen rohrförmigen Träger zu verwenden, der an seiner Unterseite längsgeschlitzt ist. In diesen Schlitz greifen Laufrollen ein, die an vertikalen Achsen gelagert sind. Außerdem sind noch vier gleichmäßig am Außenumfang verteilte Laufflächen für Laufräder vorgesehen, deren Lagerachsen parallel zur Ebene der Laufflächen stehen. Auf einen derartigen Träger können horizontale, vertikale oder schräg gerichtete Kräfte übertragen werden. Die Querschnittsform dieses Trägers ist allerdings nicht ideal und daher für gewisse Anwendungsfälle nicht brauchbar.

Sowohl im Kranbau als auch bei Handhabungsgeräten legt man selbstverständlich auf eine hohe Stabilität und Steifigkeit Wert. Bei Handhabungsgeräten mit geradlinigen Grundachsen müssen Träger längsverschieblich auf anderen Trägern gelagert werden, die ihrerseits ebenfalls bewegt werden. Weil diese Bewegungen sehr schnell ablaufen, treten hohe Achsbeschleunigungen auf, welche die Träger stark belasten. Sie müssen infolgedessen besonders stabil sein. Das Erfodernis nach hoher Stabilität steht aber demjenigen nach geringem Gewicht und kleinen Beschleunigungskräften entgegen. Infolgedessen kommt bei den Handhabungsgeräten zusätzlich zur Forderung nach Steifigkeit und Stabilität auch noch das Erfordernis der Leichtbauweise hinzu.

Während der Träger der DE-B 1 169 095 sehr stabil ist und wohl auch die notwendige Steifigkeit aufweist, fehlt es ihm aufgrund der Kastenträger-Bauweise an der notwendigen Leichtigkeit. Diese ist beim Träger der DE-A 3 313 215 vorhanden, jedoch mangelt es diesem Träger an der notwendigen Steifigkeit und Stabilität.

Die Aufgabe der Erfindung besteht infolgedessen darin, einen Träger der eingangs genannten Art so weiterzubilden, daß er unter Beibehaltung der notwendigen Steifigkeit und Stabilität in Leichtbauweise erstellt und beliebige, quer zu seiner Längsachse mittels Rädern, Gleitelementen od. dgl. aufgegebene Kräfte aufnehmen kann.

Zur Lösung dieser Aufgabe wird erfindungsgemäß vorgeschlagen, daß der Träger gemäß dem Oberbegriff des Anspruchs 1 entsprechend dem kennzeichnenden Teil dieses Anspruchs ausgebildet ist. Dieser Träger vereinigt in sich die Vorteile und Eigenschaften des Trägers der DE-B 1 169 095 sowie des Trägers der DE-A 3 313 215. Er kann forderungsgemäß nicht nur Gewichtskräfte aufnehmen, sondern beliebige andere, nach oben oder schräg oben gerichtete Kräfte. Dabei zeichnet er sich durch ein geringes Gewicht aus, ohne es deshalb an der notwendigen Steifigkeit und Stabilität fehlen zu lassen. Man kann ihn mit einer ganzen Reihe von Laufflächen ausstatten, die man jedoch nicht notwendigerweise in jedem Anwendungsfalle heranziehen muß. Dies macht ihn in besonderem Maße universell verwendbar.

An den oder einigen der Laufflächen des Profilstabs werden das Laufrad oder die Laufräder od. dgl. eines anderen Trägers oder eines Laufwagens od. dgl. entlangbewegt. Über das oder die Laufräder wird dann eine Kraft in den Profilstab eingeleitet, die über die beiden Stege auf die Tragwand oder einen Tragkörper abgeleitet wird. Aufgrund der speziellen Zuordnung der Lauffläche oder Laufflächen zu den beiden Stegen einerseits und dieser Stege zu einer anschließenden Tragwand andererseits erreicht man eine optimale Weiterleitung der über die Räder auf den bzw. ihren Profilstab eingeleiteten Kräfte an die anschließende Tragwand oder einen Tragkörper, wobei in den Stegen oder Tragwänden lediglich Scheibennormalspannungen und Scheibenschubspannungen auftreten. Nachdem die an den Steg anschließende Tragwand zumindest im Übergangsbereich mit dem Steg eine gemeinsame Ebene bildet, können dort nur Scheibenspannungen aber keine Biegespannungen und Biegeverformungen auftreten.

Bei der Ein-Träger-Lösung wird das darin zu lagernde Teil lediglich an diesem Träger verschiebbar gelagert. Andererseits ist es aber auch möglich, zwei solche Träger in paralleler Anordnung zu verwenden und an beiden gemeinsam einen weiteren Träger od. dgl. verschiebbar zu lagern. Im letzteren Fall befinden sich die insgesamt benötigten Laufflächen an zumindest je einem Profilstab jedes Trägers. Bei der Ein-Träger-Lösung befinden sich die Laufflächen an zwei Profilstäben. Im übrigen ist es durchaus möglich, bei einem Träger mit mehr als einem Profilstab an allen Profilstäben mehrere, an deren Umfang versetzt angeordnete Laufflächen vorzusehen, von denen in einem speziellen Anwendungsfall aber möglicherweise nur eine bzw. ein Teil benutzt wird. Dadurch ist der Träger besonders universell einsetzbar und man ist auf diese Weise hinsichtlich der Laufwagen od. dgl. keinen zu großen Einschränkungen unterworfen. Wenn also an einem einzigen Profilstab fünf Laufflächen vorgesehen sind, so kann man diese ggf. paarweise oder zu mehreren verwenden. Im übrigen müssen die Laufflächen nicht besonders ausgeprägte Flächen sein, vielmehr kann es sich dabei auch um die unmittelbare Flanke des prismatischen Körpers oder einen Teilbereich seiner Außenfläche handeln, die nicht notwendigerweise eben sein muß. Maßgeblich ist lediglich, daß die Normale auf die Berührungsellipse durch die gemeinsame Profilachse verläuft, welche durch die Schnittlinie der Mittelebenen durch die beiden Stege definiert ist. Hieraus folgt auch, daß es sich bei den Laufrädern insbesondere um kugelige oder ballige Räder handelt. Des weiteren ergibt sich hieraus, daß die "Laufflächen" verhältnismäßig schmal sein können, sofern überhaupt ausgeprägte Laufflächen auf der Mantelfläche des Profilstabs vorhanden sind.

Der bzw. jeder Profilstab ist somit ein Lasteinleitungselement, über welches Radkräfte in den Träger eingeleitet werden, wobei letzterer ein Tragelement bzw. ein Tragkörper ist. Der Träger bzw. das Tragelement leitet seinerseits die aufgegebenen Kräfte an irgendwelche Stützen oder ein weiteres stützendes Element weiter. Die Längsstege sind vorzugsweise einstückig mit dem Grundkörper hergestellt.

Wenn die Laufflächen körperlich nicht hervortreten, so können sie ggfs. durch eine bessere Oberflächenstruktur erkennbar sein.

Der aus den beiden halben Sechskantprismen aufgebaute Profilstab zeichnet sich durch einen insgesamt verhältnismäßig kleinen Querschnitt aus, was der angestrebten Leichtbauweise zugute kommt. Zur weiteren Gewichtsreduzierung kann man die mittlere Sechseckfläche der größeren Sechseckhälfte gemäß der zeichnerischen Darstellung des Ausführungsbeispiels noch etwas auskehlen. Aus demselben Grunde ist das Abnehmen der beiden freien Ecken der größeren Sechseckhälfte um den ebenfalls aus der Zeichnung ersichtlichen Betrag möglich und vorteilhaft. Diese dient einerseits der Gewichtsreduzierung und schafft andererseits zwei zusätzliche Paare paralleler Laufflächen.

Auch bei der Variante mit dem im Querschnitt trapezförmigen Profilstab, der an der größeren Trapezfläche einerseits sowie den beiden geneigten Trapezflächen andererseits jeweils eine Lauffläche aufweist, können, wenn die größere Trapezfläche nach oben weist, sowohl nach unten wirkende Kräfte als auch schräg nach oben gerichtete Kräfte aufgenommen werden. Wenn dieser Profilstab umfaßt wird, so können die Kräfte beliebig angreifen, ohne daß das entlang dem Profilstab bewegte Element, beispielsweise ein weiterer Profilstab eines zweiten Trägers, in irgendeiner Richtung abgehoben werden kann. Ausgehend von der mittleren Lauffläche befinden sich die beiden seitlichen gemäß der zeichnerischen Darstellung jeweils in einem 90° übertreffenden Abstand.

Eine Weiterbildung der Erfindung sieht vor, daß bei einem Träger mit mehr als einem Profilstab jeweils mindestens einem Rad, Gleitelement od. dgl. nur die mittlere Lauffläche des kleineren halben Sechskantprismas sowie die beiden Laufflächen des größeren halben Sechskantprismas des einen Profilstabs und lediglich die eine seitliche Lauffläche des kleineren halben Sechskantprismas sowie die gegenüberliegende Lauffläche des größeren halben Sechskantprismas einem anderen Profilstab zugeordnet ist.

Eine weitere Variante des Trägers, bei welchem ein Längssteg eines Profilstabs mit einem Längssteg eines anderen Profilstabs über eine vorzugsweise ebene Tragwand verbunden ist und die beiden freien Stege der Profilstäbe jeweils durch eine vorzugsweise ebene Tragwand verlängert sind, kennzeichnet sich dadurch, daß der Träger lediglich zwei Profilstäbe aufweist. Hierdurch entsteht eine Form, die mit einem längsgeschlitzten Dreikantrohr vergleichbar ist.

Die beiden Tragwände der freien Stege sind vorzugsweise nur örtlich miteinander verbunden.

Jede Tragwand besteht in weiterer Ausgestaltung der Erfindung aus zwei dünnen plattenartigen Elementen und einem sie verbindenden Waben- oder Hartschaumkern. Diese Verbindungswände zeichnen sich einerseits durch ein geringes Gewicht und andererseits durch eine gute Stabilität sowie Formbeständigkeit aus. Sie sind mit einer Sandwichplatte vergleichbar.

Die plattenartigen Elemente der Tragwand überragen in besonders vorteilhafter Weise den Kern in Querrichtung des Profilstabs gesehen und die überstehenden Enden sind jeweils mit den beiden Außenflächen des zugeordneten Längsstegs fest verbunden. Das bedeutet, daß die Dicke der Längsstege, zumindest im Befestigungsbereich, etwa dem Abstand der beiden plattenartigen Elemente entsprechen sollte. Zweckmäßigerweise sind die plattenartigen Elemente an die Längsstege angeklebt, angenietet oder angeschraubt. Zwischen die überstehenden Enden der beiden freien Tragwände wird vorteilhafterweise eine etwas stabilere Endleiste eingesetzt, die insbesondere parallel zum jeweiligen Längssteg verläuft.

Die Erfindung wird nachstehend anhand der Zeichnung näher erläutert. Hierbei stellen dar:

Fig. 1 eine Draufsicht auf einen sich senkrecht zur Bildebene erstreckenden Träger mit zwei Profilstäben gemäß Fig. 2,

Fig. 2 und 3 zwei Varianten von Profilstabquerschnitten, wobei in Fig. 2 noch zwei, benachbarte Profilstäbe verbindende Tragwände teilweise dargestellt sind.

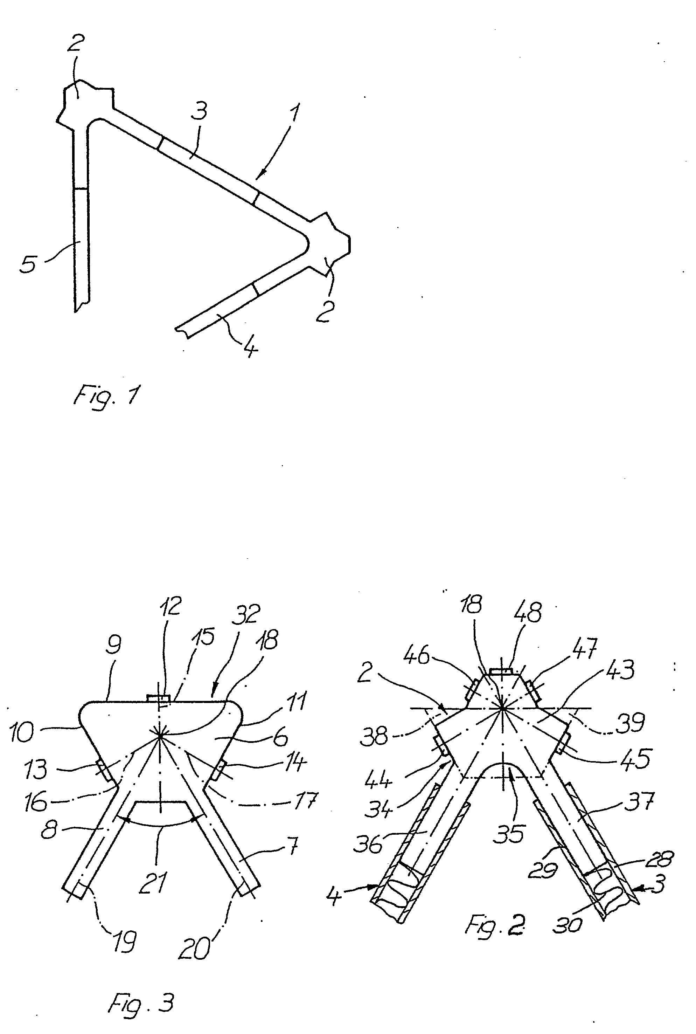

Der in Fig. 1 gezeigte Träger 1 besteht aus wenigstens zwei Profilstäben 2 gleicher Querschnittsform, die über eine Tragwand 3 miteinander verbunden sind und von denen jeder mit einer weiteren Tragwand 4 bzw. 5 verbunden ist. Auf diese Weise entsteht ein Träger, dessen Form mit derjenigen eines Dreikantrohres vergleichbar ist. Der Übersichtlichkeit wegen sind die Querschnitte der Profilstäbe übertrieben groß dargestellt. Die in Fig. 1 eingezeichneten Profilstäbe entsprechen der Ausführungsform gemäß Fig. 2.

Der in Fig. 3 gezeigte Profilstab besitzt einen Grundkörper 6, den man als trapezförmig oder etwa dreieckfömig bezeichnen kann. Mit diesem Grundkörper sind zwei winklig zueinander stehende Längsstege 7 und 8 verbunden, insbesondere einstückig hergestellt. Sie schließen einen spitzen Winkel 21 von beispielsweise etwa 60° ein.

An wenigstens einer, vorzugsweise aber allen drei Dreiecksflanken des dreikantförmigen Grundkörpers 6 befindet sich eine Laufläche 12, 13, 14. Diese Laufflächen sind sowohl in dieser Figur als auch in Figur 2 der Deutlichkeit halber als erhabene Laufflächen dargestellt. Dies ist jedoch keinesfalls erforderlich, vielmehr kann es sich bei den Laufflächen um Teilflächen der Dreiecksflanken 9, 10, 11 handeln. Genauso ist es möglich, daß die Laufflächen durch rillenartige Vertiefungen in den Dreiecksflanken gebildet werden. Wichtig ist nur, daß sich die Normalen zu den Laufflächen bzw. gedachte senkrecht auf den Dreiecksflanken stehende, insbesondere durch die Laufflächenmitte gehende Längsebenen 15, 16, 17 in einer gemeinsamen Profillängsachse 18 schneiden. Weitere gedachte Längsmittelebenen 19 und 20 durch die beiden Stege 7 und 8 verlaufen ebenfalls durch die gemeinsame Profillängsachse. Dies ist unabhängig von der jeweiligen Querschnittsform des Profilstabs bzw. seines Grundkörpers 6 grundsätzlich der Fall, weswegen bei beiden Ausführungsbeispielen die gemeinsame Profillängsachse jeweils mit 18 bezeichnet ist.

Die drei, in Fig. 1 lediglich schematisch dargestellten Tragwände 3, 4, 5 sind in Fig. 2 detaillierter gezeichnet. Jede besteht aus zwei parallelen dünnen plattenartigen Elementen 28 und 29 und einem sie verbindenden Waben- oder Hartschaumkern 30. Die plattenartigen Elemente überragen den Kern 30 vorzugsweise in Querrichtung des Profilstabs 2. Dadurch können sie mit ihren überstehenden Rändern an den beiden parallelen Außenflächen des in den Spaltraum zwischen den Elementen 28 und 29 eingreifenden Längsstegs 36 bzw. 37 befestigt werden.

In Fig. 2 ist ein bevorzugtes Ausführungsbeispiel eines Profilstabs dargestellt, der mit 2 bezeichnet ist. Er besitzt eine Querschnittsform, die man im wesentlichen wie folgt beschreiben kann. Sie besteht aus zwei mit ihren Trennflächen mittig aneinandergesetzten, unterschiedlich großen Sechseckhälften 33 und 34, wobei die Sechsecke über Eck durchgetrennt wurden. Der Grundkörper 43 besteht demnach aus einer größeren und einer kleineren Sechskantprismenhälfte. Dabei verhalten sich die Eckmaße bzw. Umkreisdurchmesser der Sechsecke des größeren und kleineren Sechsecks etwa wie 2:1. An die Ecken der größeren Sechseckhälfte 34 sind die beiden Stege 36 und 37 angesetzt, insbesondere angeformt. Zur weiteren Gewichtsreduzierung kann die mittlere Sechseckfläche der größeren Sechseckhälfte gemäß Fig. 2 mit einer Hohlkehle 35 od. dgl. versehen sein. Aus der gleichen Überlegung heraus kann man auch die beiden freien Ecken 38, 39 der größeren Sechseckhälfte noch etwas abnehmen. Die gedanklich abgenommenen Teile sind teilweise durch strichpunktierte Linien und zum anderen Teil durch die tatsächlichen Umrißlinien in Fig. 2 eingezeichnet.

Dieser Profilstab kann zum Beispiel und in bevorzugter Weise fünf Laufflächen 44 bis 48 aufweisen. Dabei bilden die Laufflächen 44 und 47 einerseits sowie 45 und 46 andererseits jeweils ein Laufflächenpaar für ein entsprechendes Radpaar oder Radpaare. Bei Verwendung zweier Profilstäbe dieser Art an einem Träger werden normalerweise nicht alle, sondern lediglich ein Teil der Laufflächen oder Laufflächenpaare benutzt, insbesondere die Laufflächen 44, 45, 48 am einen und 44, 47 oder 45, 46 am anderen Profilstab.

Insbesondere aus Fig. 2 ersieht man, daß jeder Steg 36, 37 und die sich in Verlängerung anschließende ebene Tragwand 3, 4 in einer gemeinsamen Ebene liegen. Wenn die Tragwände nicht eben, sondern beispielsweise gewölbt, winkelförmig oder von ganz anderer Gestalt sind, so gilt auf jeden Fall, daß im Übergangsbereich vom Längssteg zum anschließenden Tragwandlängsbereich eine gemeinsame Ebene vorhanden sein muß. Anders ausgedrückt sollen beispielsweise bei einem ebenen Längssteg und einer ebenen Tragwand die Längsmittelebenen dieser beiden Elemente keinen Winkel einschließen. Nachdem der erfindungsgemäße Träger aus lediglich einem einzigen Profilstab und einer einzigen Tragwand bestehen kann, wobei der Profilstab aber auch in diesem Falle zwei Längsstege besitzt, ist leicht einzusehen, daß jedem dieser beiden Längsstege ein Längsrand der Tragwand zugeordnet ist oder sein kann. In diesem Falle könnte die Querschnittsform der Tragwand beispielsweise etwa C-förmig sein. Die Tragwand bestimmt in erster Linie die Schubsteifigkeit des Trägers, während die zur Lasteinleitung dienenden Profilstäbe die Biegesteifigkeit des Trägers bestimmen. Die Tragfähigkeit des gesamten Trägers wird erst durch den Verbund beider Elemente erzielt.

Eine andere Variante eines Trägers kennzeichnet sich dadurch, daß jede Tragwand 3, 4, 5 aus einer dünnwandigen Platte und aussteifenden Elementen, insbesondere etwa parallel zum Profilstab 2, 32 verlaufenden Längsrippen, Sicken u. dgl. besteht. Die Stärke der dünnwandigen Platte ist insbesondere geringer als die Dicke der Längsstege 7, 8, 36, 37. Vorzugsweise beträgt sie etwa 0,3 bis 5 mm. Am Übergang zum zugeordneten Längssteg kann eine evtl. erforderliche Dickenanpassung vorgenommen werden.

Eine weitere Variante eines derartigen Trägers ist dadurch gekennzeichnet, daß jede Tragwand aus zwei dünnwandigen, durch Stege miteinander verbundenen Platten besteht, wobei die Stege insbesondere parallel zur Längsrichtung des Trägers verlaufen. Die Dicke jeder dieser Platten liegt vorzugsweise in der Größenordnung von 0,3 bis 1,5 mm. Dies ergibt dann eine Gesamtdicke bis zu ca. 6 oder 8 mm. Diese Tragwand kann beispielsweise in der aus Fig. 2 ersichtlichen Weise mit dem zugeordneten Längssteg verbunden werden. Auch im vorgenannten Falle kann eine Umfassung des Längsstegs vorgesehen sein, wobei dann der Endbereich der dünnwandigen Platte entsprechend formlich angepaßt werden muß.

**Patentansprüche**

1. Wenigstens einen Profilstab und zumindest eine Tragwand oder einen Tragkörper aufweisender Träger, bei welchem jeder Profilstab (2, 32) sich in dessen Längsrichtung erstreckende Laufflächen (12 bis 14; 44 bis 48) für zumindest je ein Rad, Gleitelement od. dgl. und zwei einen Winkel (21) einschließende Längsstege (7, 8; 36, 37) aufweist, wobei die Längs-Mittelebenen (19, 20) der beiden Stege und sich senkrecht zu jeder Lauffläche (12 bis 14; 44 bis 48) erstreckende, gedachte Längsebenen (15, 16, 17) etwa in einer gemeinsamen Profillängsachse (18) schneiden und jeder Steg (7, 8; 36, 37) sowie die anschließende Tragwand (3, 4, 5) mindestens im Übergangsbereich eine gemeinsame Ebene, insbesondere Mittelebene, bilden, wobei außerdem der Querschnitt jedes Profilstabs (2, 32) zu einer gedachten Längsebene durch die Winkelhalbierende des von den beiden Längsstegen (7, 8; 36, 37) eingeschlossenen Winkels (z.B. 21) symmetrisch ausgebildet ist und die Längsstege (7, 8; 37, 36) vorzugsweise einen rechteckigen Querschnitt aufweisen sowie einen Winkel von etwa 30° bis 90°, vorzugsweise von etwa 60° einschließen, dadurch gekennzeichnet, daß der Querschnitt des mit drei außenliegenden Laufflächen ausgestatteten Profilstabs (32) ohne Stege (7, 8) etwa trapezförmig ist, wobei letztere der kurzen Grundlinie zugeordnet sind, oder daß der Querschnitt des Profilstabs (2) etwa die Gestalt zweier, mit ihren Trennflächen mittig aneinandergesetzter, unterschiedlich großer Sechseckhälften aufweist und an den beiden Ecken der größeren Sechseckhälfte je ein Längssteg (36, 37) angesetzt ist, wobei jede Außenfläche des kleineren halben Sechskantprismas eine von drei Laufflächen (46, 47, 48) und jede der beiden seitlichen Außenflächen des größeren Sechskantprismas eine von zwei zusätzlichen Laufflächen (44, 45) tragen, bilden oder aufweisen.

2. Träger nach Anspruch 1, dadurch gekennzeichnet, daß bei einem Träger mit mehr als einem Profilstab jeweils mindestens einem Rad, Gleitelement od. dgl. nur die mittlere Lauffläche (48) des kleineren halben Sechskantprismas sowie die beiden Laufflächen (44, 45) des größeren halben Sechskantprismas des einen Profilstabs (2) und lediglich die eine seitliche Lauffläche (46 oder 47) des kleineren halben Sechskantprismas sowie die gegenüberliegende Lauffläche (45 oder 44) des größeren halben Sechskantprismas eines anderen Profilstabs (2) zugeordnet ist.

3. Träger nach Anspruch 1 oder 2, bei welchem ein Längssteg (7, 8; 36, 37) eines Profilstabs (2, 32) mit einem Längssteg eines anderen Profilstabs über eine vorzugsweise ebene Tragwand (3, 4, 5) verbunden ist und die beiden freien Stege der Profilstäbe jeweils durch eine vorzugsweise ebene Tragwand verlängert sind, dadurch gekennzeichnet, daß der Träger lediglich zwei Profilstäbe (2, 32) aufweist.

4. Träger nach Anspruch 3, dadurch gekennzeichnet, daß jede Tragwand (3, 4, 5) aus zwei dünnen plattenartigen Elementen (28, 29) und einem sie verbindenden Waben- oder Hartschaumkern (30) besteht.

5. Träger nach Anspruch 4, dadurch gekennzeichnet, daß die plattenartigen Elemente (28, 29) der Tragwand (3, 4, 5) den Kern (30) in Querrichtung des Profilstabs (2, 32) beidendig überragen und die überstehenden Enden jeweils mit den beiden Außenflächen des zugeordneten Längsstegs (7, 8; 36, 37) fest verbunden sind.

6. Träger nach Anspruch 5, dadurch gekennzeichnet, daß die plattenartigen Elemente (28, 29) an die Längsstege (7, 8; 36, 37) angeklebt, angenietet oder angeschraubt sind.

7. Träger nach Anspruch 3, dadurch gekennzeichnet, daß jede Tragwand (3, 4, 5) aus einer dünnwandigen Platte und aussteifenden Elementen, insbesondere etwa parallel zum Profilstab (2, 32) verlaufenden Längsrippen, Sicken u. dgl. besteht.

8. Träger nach Anspruch 3, dadurch gekennzeichnet, daß jede Tragwand (3, 4, 5) aus zwei dünnwandigen, durch Stege miteinander verbundenen Platten besteht, wobei die Stege insbesondere parallel zur Längsrichtung des Trägers verlaufen.

**Claims**

1. A girder which comprises at least one profiled bar and at least one support wall or supporting member, in the case of which each profiled bar (2, 32) comprises bearing surfaces (12 to 14; 44 to 48), extending in the longitudinal direction thereof, for at least one wheel, sliding member or the like in each case, and two elongate legs (7, 8; 36, 37) making an angle (21), the longitudinal centre plane (19, 20) of the two legs and the imaginary longitudinal planes (15, 16, 17), extending perpendicular to each bearing surface (12 to 14; 44 to 48) intersecting in a common longitudinal axis (18) of the profiled bar, and each leg (7, 8; 36, 37) and the adjoining support wall (3, 4, 5) forming a common plane, in particular a central plane, in the transition region, in addition the cross-section of each profiled bar (2, 32) being symmetrically constructed to form an imaginary longitudinal plane trough the angle bisector of the angle (eg. 21) formed by the two elongate legs (7, 8; 36, 37), and the elongate legs (7, 8; 37, 36) having a preferably rectangular cross-section and making an angle of approximately 30° to 90°, preferably 60°, characterised in that the cross-section of the profiled bar (32) equipped with three external bearing surfaces without legs (7, 8) is approximately trapezoidal, the latter being associated with the short base line; or in that the cross-section of the profiled bar (2) has the approximate form of two hexagon halves, which are of different sizes and have their joint faces attached centrally, and an elongate bar in each case is applied at both corners of the larger hexagon half, each outer face of the smaller half hexagonal prism bearing, forming or comprising one of three bearing surfaces (46, 47, 48) and each of the two lateral outer faces of the larger hexagonal prism bearing, forming or comprising one of two additional bearing surfaces (44, 45).

2. Girder as claimed in claim 1, characterised in that in the case of girder with more than one profiled bar in each case only the central bearing surface (48) of the smaller half hexagon prism as well as the two bearing surfaces (44, 45) of the larger half hexagon prism of one profiled bar (2) and only one lateral bearing surface (46 or 47) of the smaller half hexagon prism as well as the opposite bearing surface (45 or 44) of the larger half hexagon prism of another profiled bar (2) is associated with at least one wheel, sliding member or the like in each case.

3. Girder as claimed in claim 1 or 2, in the case of which an elongate leg (7, 8, 36, 37) of a profiled bar (2, 32) is connected to an elongate leg of another profiled bar by means of a preferably flat support wall (3, 4, 5), and the two free legs of the profiled bars in each case are extended by means of a preferably flat support wall, characterised in that the girder comprises only two profiled bars (2, 32).

4. Girder as claimed in claim 3, characterised in that each support wall (3, 4, 5) consists of two thin, plate-like components (28, 29) and a honeycomb or hard foam core (30).

5. Girder as claimed in claim 4, characterised in that the plate-like components (28, 29) of the support wall (3, 4, 5) project above both ends of the core (30) in the transverse direction of the profiled bar (2, 32), and the projecting ends in each case are rigidly connected to the two outer faces of the associated elongate leg (7, 8; 36, 37).

6. Girder as claimed in claim 5, characterised in that the plate-like components (28, 29) are stuck, riveted or screwed to the elongate legs (7, 8; 36; 37).

7. Girder as claimed in claim 3, characterised in that each support wall (3, 4, 5) consists of a thin-walled plate and strengthening components, in particular longitudinal ribs, beads or the like extending approximately parallel to the profiled bar (2, 32).

8. Girder as claimed in claim 3, characterised in that each support wall (3, 4, 5) consists of two thin-walled plates which are connected to one another by crosspieces, the crosspieces extending in particular parallel to the longitudinal direction of the girder.

**Revendications**

1. Poutre comportant au moins une barre profilée et au moins une paroi porteuse ou un corps porteur, dans laquelle chaque barre profilée (2, 32) comporte des surfaces de roulement (12 à 14; 44 à 48) qui s'étendent dans sa direction longitudinale et qui sont destinées à au moins une roue, un élément glissant ou similaire, et deux ailes longitudinales (7, 8; 36, 37) formant un angle (21), cependant que les plans médians longitudinaux (19, 20) des deux ailes et des plans longitudinaux imaginaires (15, 16, 17) qui s'étendent perpendiculairement à chaque surface de roulement (12 à 14; 44 à 48) se coupent sensiblement dans un axe longitudinal commun (18) du profilé. et que chaque aile (7, 8; 36, 37), ainsi que la paroi porteuse (3, 4, 5) qui y est raccordée, forment un plan commun, en particulier un plan médian, du moins dans la zone de transition, et cependant, en outre, que la section transversale de chaque barre profilée (2, 32) est réalisée symétriquement par rapport à un plan longitudinal imaginaire passant par la bissectrice de l'angle (par exemple 21) formé par les deux ailes longitudinales (7, 8; 36, 37), et que les ailes longitudinales (7, 8; 37, 36) présentent de préférence une section transversale rectangulaire, et forment entre elles un angle de 30° à 90° environ, et de préférence de 60° environ, caractérisée par le fait que la section transversale de la barre profilée (32) munie de trois surfaces de roulement extérieures présente, sans ses ailes (7, 8), la forme approximative d'un trapèze dont la petite base et associée à ces dernières, ou par le fait que la section transversale de la barre profilée (2) présente sensiblement la forme de deux demi-hexagones de grandeurs différentes qui sont posés centralement l'un sur l'autre par leurs surfaces de séparation, une aile longitudinale (36, 37) étant disposée sur chacun des deux sommets du plus grand demi-hexagone, cependant que chaque surface extérieure du plus petit demi-prisme hexagonal porte, forme ou comporte l'une de trois surfaces de roulement (46, 47, 48) et que chacune des deux surfaces extérieures latérales du plus grand demi-prisme hexagonal porte, forme ou comporte l'une de deux surfaces de roulement supplémentaires (44, 45).

2. Poutre selon la revendication 1, caractérisée par le fait que, dans le cas d'une poutre comprenant plus d'une barre profilée, on n'associe à chaque fois, à au moins une roue, un élément glissant ou similaire, que la surface de roulement centrale (48) du plus petit demi-prisme hexagonal, ainsi que les deux surfaces de roulement (44, 45) du plus grand demi-prisme hexagonal, de l'une (2) des barres profilées, et seulement l'une des surfaces de roulement latérales (46 ou 47) du plus petit demi-prisme hexagonal, ainsi que la surface de roulement opposée (45 ou 44) du plus grand demi-prisme hexagonal, d'une autre barre profilée (2).

3. Poutre selon la revendication 1 ou 2, dans laquelle une aile longitudinale (7, 8; 36, 37) d'une barre profilée (2, 32) est reliée à une aile longitudinale d'une autre barre profilée par l'intermédiaire d'une paroi porteuse (3, 4, 5) de préférence plane, et dans laquelle les deux ailes libres des barres profilées sont à chaque fois prolongées par une paroi porteuse de préférence plane, caractérisée par le fait que la poutre ne comporte que deux barres profilées (2, 32).

4. Poutre selon la revendication 3, caractérisée par le fait que chaque paroi porteuse (3, 4, 5) se compose de deux éléments minces (28, 29) analogues à des plaques, et d'un noyau (30) en nid d'abeilles ou en mousse dure qui les relie.

5. Poutre selon la revendication 4, caractérisée par le fait que les éléments analogues à des plaques (28, 29) de la paroi porteuse (3, 4, 5) font saillie des deux côtés au-delà du noyau (30) dans la direction transversale de la barre profilée (2, 32), et que les extrémités en saillie sont à chaque fois reliées rigidement aux deux surfaces extérieures de l'aile longitudinale associée (7, 8; 36, 37).

6. Poutre selon la revendication 5, caractérisée par le fait que les éléments analogues à des plaques (28, 29) sont collés, rivés ou vissés sur les ailes longitudinales (7, 8; 36, 37).

7. Poutre selon la revendication 3, caractérisée par le fait que chaque paroi porteuse (3, 4, 5) se compose d'une plaque à paroi mince et d'éléments raidisseurs, en particulier de nervures longitudinales, de moulures et similaires qui s'étendent de manière sensiblement parallèle à la barre profilée (2, 32).

8. Poutre selon la revendication 3, caractérisée par le fait que chaque paroi porteuse (3, 4, 5) se compose de deux plaques à paroi mince reliées entre elles par des entretoises, ces entretoises s'étendant en particulier parallèlement à la direction longitudinale de la poutre.

Fig. 1

Fig. 3

Fig. 2